# EUROPÄISCHE PATENTANMELDUNG

(11) **EP 2 529 871 A2**
(43) Veröffentlichungstag der Anmeldung: **05.12.2012**
(21) Anmeldenummer: 12002423.7
(22) Anmeldetag: 03.04.2012
(51) Int. Cl.: B23F 23/12

(54) **Verfahren zum Abrichten eines Werkzeugs**

(30) Priorität: 01.06.2011 DE 102011103216
(71) Anmelder: LIEBHERR-VERZAHNTECHNIK GmbH, 87437 Kempten (DE)
(72) Erfinder: Geiser, Hansjörg, 87487 Wissgensbach (DE)
(74) Vertreter: Laufhütte, Dieter

(57) **Zusammenfassung**

Die vorliegende Erfindung betrifft ein Verfahren zum Abrichten eines Werkzeuges einer Verzahnungsschleifmaschine, welche eine Werkstückaufnahme und eine Werkzeugaufnahme aufweist, wobei die Werkzeugaufnahme um eine erste Drehachse (B1) in Rotation versetzbar und an einem Bearbeitungskopf angeordnet ist, welcher über eine Schwenkachse (A1) schwenkbar und über eine erste lineare Bewegungsachse (V1) linear bewegbar ist, wobei ein in der Werkstückaufnahme eingespanntes Werkstück durch ein in der Werkzeugaufnahme eingespanntes Werkzeug bearbeitet werden kann, wobei die Verzahnungsschleifmaschine weiterhin eine Abrichteinheit mit einer Abrichtwerkzeugaufnahme, welche um eine zweite Drehachse (B2) in Rotation versetzbar ist, aufweist, wobei ein in der Abrichtwerkzeugaufnahme aufgenommenes Abrichtwerkzeug zum Abrichten eines in der Werkzeugaufnahme eingespannten Werkzeuges eingesetzt wird. Dabei ist vorgesehen, dass der Bearbeitungskopf während des Abrichtvorgangs in Abhängigkeit von dem zu erzeugenden Profil des Werkzeuges um die Schwenkachse (A1) verschwenkt und mit der ersten linearen Bewegungsachse (V1) linear bewegt wird, wobei die zur Erzeugung des gewünschten Profils notwendigen Relativbewegungen zwischen Abrichtwerkzeug und Werkzeug zumindest zum Teil durch die Überlagerung der Bewegungen der Schwenkachse (A1) und der ersten linearen Bewegungsachse (V1) erzeugt werden.

## Beschreibung

Die vorliegende Erfindung betrifft ein Verfahren zum Abrichten eines Werkzeugs auf einer Verzahnungsschleifmaschine sowie eine Verzahnungsschleifmaschine. Die Verzahnungsschleifmaschine weist dabei eine Werkstückaufnahme und eine Werkzeugaufnahme auf, wobei die Werkzeugaufnahme um eine erste Drehachse (B1) in Rotation versetzbar und an einem Bearbeitungskopf angeordnet ist, welcher über eine Schwenkachse (A1) schwenkbar und über eine Shiftachse (V1) linear verfahrbar ist. Dabei kann ein in der Werkstückaufnahme eingespanntes Werkstück durch ein in der Werkzeugaufnahme eingespanntes Werkzeug bearbeitet werden.

Die Verzahnungsschleifmaschine weist weiterhin eine Abrichteinheit mit einer Abrichtwerkzeugaufnahme auf, welche um eine zweite Drehachse (B2) in Rotation versetzbar ist. Dabei wird bei dem erfindungsgemäßen Verfahren ein in der Abrichtwerkzeugaufnahme aufgenommenes Abrichtwerkzeug zum Abrichten eines in der Werkzeugaufnahme eingespannten Werkzeugs eingesetzt.

Die beim Verzahnungsschleifen eingesetzten Werkzeuge sind einem stetigen Verschleiß ausgesetzt und müssen daher in regelmäßigen Abständen abgerichtet werden. Der Schleifbelag der Werkzeuge besteht dabei aus in einem Bindungsmaterial gebundenen Schleifkörnern, wobei beim Abrichten ein Abtrag von Schleifkörnern und Bindungsmaterial des Werkzeugs mit dem Ziel erfolgt, den Schleifbelag zur Erzeugung des gewünschten Profils des Werkzeugs und der erforderlichen Profilgenauigkeit zu verändern (Makrogeometrie). Das Werkzeug kann dabei über ein in der Abrichtwerkzeugaufnahme aufgenommenes rotierendes Abrichtwerkzeug abgerichtet werden, während es in der Werkzeugaufnahme eingespannt bleibt.

Bei dem aus dem Stand der Technik bekannten Abrichtverfahren wird ein gewünschtes Profil des Werkzeugs beim Abrichten dadurch erreicht, daß die zur Erzeugung des gewünschten Profils notwendigen Relativbewegungen zwischen Werkzeug und Abrichtwerkzeug durch die Überlagerung einer Bewegung einer Bewegungsachse der Abrichteinheit mit einer Bewegung einer Bewegungsachse des Bearbeitungskopfes erzeugt werden.

Aufgabe der vorliegenden Erfindung ist es, ein verbessertes Verfahren zum Abrichten eines Werkzeugs zur Verfügung zu stellen. Weiter ist es Aufgabe der vorliegenden Erfindung, eine verbesserte Verzahnungsschleifmaschine zur Verfügung zu stellen.

Diese Aufgabe wird erfindungsgemäß durch ein Verfahren gemäß Anspruch 1 und eine Verzahnungsschleifmaschine gemäß Anspruch 9 oder 10 gelöst.

Die vorliegende Erfindung zeigt dabei ein Verfahren zum Abrichten eines Werkzeugs auf einer Verzahnungsschleifmaschine, die eine Werkstückaufnahme und eine Werkzeugaufnahme aufweist, wobei die Werkzeugaufnahme um eine erste Drehachse (B1) in Rotation versetzbar und an einem Bearbeitungskopf angeordnet ist, welcher über eine Schwenkachse (A1) schwenkbar und über eine erste lineare Bewegungsachse (V1) linear bewegbar ist, wobei ein in der Werkstückaufnahme eingespanntes Werkstück durch ein in der Werkzeugaufnahme eingespanntes Werkzeug bearbeitet werden kann. Die Verzahnungsschleifmaschine weist weiterhin eine Abrichteinheit mit einer Abrichtwerkzeugaufnahme, welche um eine zweite Drehachse (B2) in Rotation versetzbar ist auf, wobei ein in der Abrichtwerkzeugaufnahme aufgenommenes Abrichtwerkzeug zum Abrichten des in der Werkzeugaufnahme eingespannten Werkzeugs eingesetzt wird.

Erfindungsgemäß ist dabei vorgesehen, daß der Bearbeitungskopf während des Abrichtvorgangs in Abhängigkeit von dem zu erzeugenden Profil des Werkzeugs durch aufeinander abgestimmte Bewegungen der Schwenkachse (A1) und der ersten linearen Bewegungsachse (V1) verschwenkt und linear bewegt wird, wobei die zur Erzeugung des gewünschten Profils notwendigen Relativbewegungen zwischen Abrichtwerkzeug und Werkzeug zumindest zum Teil durch die Überlagerung der Bewegungen der Schwenkachse (A1) und der ersten linearen Bewegungsachse (V1) erzeugt werden. Das erfindungsgemäße Verfahren kann dabei bspw. zum Herstellen oder Wiederherstellen eines gewünschten Profils und/oder zum Modifizieren eines Profils eingesetzt werden.

Die Erfinder der vorliegenden Erfindung haben dabei erkannt, daß zur Erzeugung der beim Abrichten notwendigen Relativbewegungen keine Bewegungsachsen der Abrichteinheit eingesetzt werden müssen. Vielmehr können diese Relativbewegungen über die ohnehin für die Bearbeitung eines Werkstücks vorhandene Schwenkachse (A1) und erste lineare Bewegungsachse (V1) des Bearbeitungskopfes erzeugt werden. Hierdurch können beim erfindungsgemäßen Verfahren die ohnehin vorhandenen Achsen der Verzahnungsschleifmaschine besser genutzt werden. Dies ermöglicht zum Einen einen flexibleren Abrichtvorgang, und zum Anderen die Verwendung einer einfacher aufgebauten Verzahnungsschleifmaschine.

Das gewünschte Profil des Werkzeugs wird dabei erfindungsgemäß dadurch erzeugt, daß das rotierende Werkzeug durch die Bewegung des Bearbeitungskopfes über die Schwenkachse (A1) und die erste lineare Bewegungsachse (V1) am ebenfalls rotierenden Abrichtwerkzeug zur Erzeugung des gewünschten Profils vorbeigeführt wird, während Abrichtwerkzeug und Werkzeug miteinander in Eingriff stehen.

In vorteilhafter Weise steht dabei die Schwenkachse (A1) des Bearbeitungskopfes senkrecht auf der Drehachse (B1) der Werkzeugaufnahme.

Weiterhin vorteilhafterweise werden im Rahmen des erfindungsgemäßen Verfahrens die Schwenkachse (A1) und die erste lineare Bewegungsachse (V1) auch bei der Bearbeitung eines Werkstücks auf der Verzahnschleifmaschine eingesetzt.

Insbesondere kann die Schwenkachse (A1) bei der Bearbeitung eines Werkstücks zum Einstellen des Winkels zwischen der Werkzeugachse und der Werkstückachse eingesetzt werden, bsp. bei der Herstellung einer Schrägverzahnung.

Weiterhin kann die erste lineare Bewegungsachse (V1) zum Vershiften des Werkzeuges eingesetzt werden, bsp. um eine andere Stelle des Werkzeuges mit dem Werkstück in Eingriff zu bringen.

Erfindungsgemäß ist die Abrichteinheit dabei so an der Verzahnschleifmaschine angeordnet, dass der Bearbeitungskopf mit der Werkzeugaufnahme über eine erste lineare Bewegungsachse (V1) relativ zur Abrichteinheit bewegbar ist. Die lineare Bewegungsachse (V1) stellt damit den zur Erzeugung eines gewünschten zweidimensionalen Profils des Werkzeugs neben der Schwenkachse (A1) notwendigen zweiten Freiheitsgrad zur Verfügung.

Vorteilhafterweise werden dabei die während des Abrichtvorgangs zur Erzeugung des gewünschten Profils notwendigen Relativbewegungen zwischen Abrichtwerkzeug und Werkzeug allein über eine Bewegung des Bearbeitungskopfes erzeugt. Insbesondere kann die Abrichteinheit so ohne eine lineare Bewegungsachse an der Verzahnmaschine angeordnet werden, und vorteilhafterweise komplett starr.

Zusätzlich zur Erzeugung des gewünschten Profils kann die Schwenkachse (A1) und/oder die erste lineare Bewegungsachse (V1) des Bearbeitungskopfes erfindungsgemäß weiterhin dazu genutzt werden, um das in der Werkzeugaufnahme aufgenommene Werkzeug aus einer Schleifposition in eine Abrichtposition an das Abrichtwerkzeug heranzufahren. Insbesondere kann das Werkzeug dabei aus einer Schleifposition in die Abrichtposition durch die Schwenkachse (A1) verschwenkt werden.

Vorteilhafterweise wird dabei das in der Werkzeugaufnahme aufgenommene Werkzeug allein durch Bewegungen des Bearbeitungskopfes an das Abrichtwerkzeug herangefahren.

Weiterhin kann bei dem erfindungsgemäßen Verfahren bzw. der dazu eingesetzten Verzahnungsschleifmaschine vorgesehen sein, daß die Werkstückaufnahme um eine dritte Drehachse (C1) in Rotation versetzbar ist und der Bearbeitungskopf auf einem Schlitten angeordnet ist, welcher über eine zweite lineare Bewegungsachse (Z1) parallel zur Drehachse (C1) der Werkstückaufnahme bewegbar ist.

In vorteilhafter Weise kann dabei vorgesehen sein, daß die erste lineare Bewegungsachse (V1) eine lineare Bewegung des Bearbeitungskopfes relativ zum Schlitten erlaubt.

Weiterhin in vorteilhafter Weise kann vorgesehen sein, daß die Schwenkachse (A1) eine Schwenkbewegung des Bearbeitungskopfes relativ zum Schlitten erlaubt.

Weiterhin kann vorgesehen sein, daß die erste lineare Bewegungsachse (V1) zwischen der Schwenkachse (A1) und dem Schlitten angeordnet ist. Weiterhin kann vorgesehen sein, daß die erste lineare Bewegungsachse (V1) senkrecht auf der zweiten linearen Bewegungsachse (Z1) steht.

Alternativ kann jedoch auch vorgesehen sein, daß die Schwenkachse (A1) zwischen der ersten linearen Bewegungsachse (V1) und dem Schlitten angeordnet ist.

Weiterhin kann vorgesehen sein, daß der Schlitten an einem Maschinenständer angeordnet ist, welcher über eine dritte lineare Bewegungsachse (X1) senkrecht zur Drehachse (C1) der Werkstückaufnahme verfahrbar ist.

In vorteilhafter Weise kann dabei erfindungsgemäß die Abrichteinheit am Schlitten angeordnet sein, wobei die Relativbewegungen zum Abrichten durch die zwischen dem Schlitten und dem Bearbeitungskopf angeordnete Drehachse (A1) und erste lineare Bewegungsachse (V1) erzeugt werden. Da diese beiden Bewegungsachsen zur Erzeugung sämtlicher beim Abrichten notwendigen Bewegungen ausreichen, kann dabei die Abrichteinheit zumindest hinsichtlich linearer Bewegungen starr am Schlitten angeordnet sein.

Weiterhin kann erfindungsgemäß eine zweite Abrichteinheit vorgesehen sein, welche über eine vierte lineare Bewegungsachse (Z3) auf die erste Abrichteinheit zu und von dieser wegbewegt werden kann, um den Abstand zwischen den in den Abrichtwerkzeugaufnahmen der ersten und zweiten Abrichteinheiten aufgenommenen Abrichtwerkzeuge zu verändern. In vorteilhafter Weise ist dabei bei dem erfindungsgemäßen Verfahren vorgesehen, daß die beiden Abrichteinheiten zum zweiseitigen Abrichten des Werkzeugs eingesetzt werden.

Das erfindungsgemäße Verfahren kann auch bei solchen Bearbeitungsköpfen eingesetzt werden, welche zwei Werkzeugaufnahmen zur Aufnahme von separaten Werkzeugen aufweisen. In vorteilhafter Weise werden dabei die beiden in den Werkzeugaufnahmen aufgenommenen Werkzeuge über mindestens eine gemeinsame Abrichteinheit abgerichtet. Insbesondere kann dabei vorgesehen sein, daß nach dem Abrichten des ersten Werkzeugs das zweite Werkzeug durch ein Schwenken des Bearbeitungskopfes um die Schwenkachse (A1) zur Abrichteinheit bewegt wird. In vorteilhafter Weise sind die beiden Werkzeugaufnahmen dabei auf einer gemeinsamen Drehachse (B1) angeordnet. Alternativ oder zusätzlich kann vorgesehen sein, daß die beiden Werkzeugaufnahmen über einen gemeinsamen Antrieb angetrieben werden.

Neben dem erfindungsgemäßen Verfahren zum Abrichten eines Werkzeugs umfaßt die vorliegende Erfindung weiterhin ein Verfahren zur Herstellung eines Zahnrades auf einer Verzahnungsschleifmaschine, bei welchem ein in einer Werkstückaufnahme eingespanntes Werkstück durch ein in der Werkzeugaufnahme eingespanntes Werkzeug bearbeitet wird. Insbesondere erfolgt dabei die Hartfeinbearbeitung des Werkstücks durch das in der Werkzeugaufnahme eingespannte Werkzeug. Erfindungsgemäß wird dabei das Werkzeug gemäß dem oben beschriebenen erfindungsgemäßen Verfahren abgerichtet, um das zur Erzeugung der gewünschten Werkstückgeometrie notwendige Werkzeugprofil herzustellen. Das erfindungsgemäße Verfahren zum Abrichten des Werkzeugs erlaubt so eine besonders flexible, einfache und kostengünstige Herstellung von Zahnrädern mit einer gewünschten Zahnradgeometrie und Oberflächenqualität.

Die vorliegende Erfindung umfaßt weiterhin eine Verzahnungsschleifmaschine mit einer Steuerung zum automatischen Ansteuern der Bewegungsachsen der Verzahnungsschleifmaschine während des Bearbeitens eines Werkstücks und/oder während des Abrichtens eines Werkzeugs. Erfindungsgemäß weist die Steuerung dabei eine Funktion zur Durchführung eines Verfahrens zum Abrichten eines Werkzeugs auf, wie es oben beschrieben wurde. In vorteilhafter Weise steuert die Steuerung dabei während des Abrichtvorgangs die zur Erzeugung eines gewünschten Profils des Werkzeugs notwendigen Relativbewegungen durch eine entsprechende Verschwenkung des Bearbeitungskopfes über die Schwenkachse (A1) und eine darauf abgestimmte lineare Bewegung der ersten linearen Bewegungsachse (V1). In vorteilhafter Weise berechnet die Steuerung dabei die zur Erzeugung eines gewünschten Profils notwendigen Schwenkbewegungen des Bearbeitungskopfes. Weiterhin vorteilhafter Weise weist die Steuerung eine Eingabefunktion zur Eingabe von Daten zum gewünschten Profil des Werkzeugs auf, aus welchen die Relativbewegungen berechnet werden. In vorteilhafter Weise ist die Steuerung dabei so ausgeführt, daß die Abrichtfunktion die Achsen der Verzahnungsschleifmaschine bei der Durchführung der oben beschriebenen Verfahrensschritte automatisiert ansteuert.

Insbesondere ist die Verzahnungsschleifmaschine dabei weiterhin so aufgebaut, wie dies weiter oben bezüglich des Verfahrens beschrieben wurde. Insbesondere weist die Verzahnungsschleifmaschine dabei eine Werkzeugaufnahme auf, welche um eine erste Drehachse (B1) in Rotation versetzbar ist und an einem Bearbeitungskopf angeordnet ist, welcher über eine Schwenkachse (A1) schwenkbar ist. Weiterhin weist die Verzahnungsschleifmaschine eine Abrichteinheit mit einer Abrichtwerkzeugaufnahme auf, welche um eine zweite Drehachse (B2) in Rotation versetzbar ist. Weiterhin kann der Bearbeitungskopf mit der Werkzeugaufnahme über eine erste lineare Bewegungsachse (V1) relativ zur Abrichteinheit bewegbar sein. Weiterhin kann die Werkstückaufnahme um eine dritte Drehachse (C1) in Rotation versetzbar sein und der Bearbeitungskopf auf einem Schlitten angeordnet sein, welcher über eine zweite lineare Bewegungsachse (Z1) parallel zur Drehachse (C) der Werkstückaufnahme bewegbar ist. Weiterhin kann vorgesehen sein, daß der Schlitten an einem Maschinenständer angeordnet ist, welcher über eine dritte lineare Bewegungsachse (X1) senkrecht zur Drehachse (C1) der Werkstückaufnahme verfahrbar ist. Auch der weitere Aufbau der Verzahnungsschleifmaschine kann dabei so gestaltet sein, wie dies bereits oben beschrieben wurde.

Da bei der erfindungsgemäßen Verzahnungsschleifmaschine die Relativbewegungen zwischen Werkzeug und Abrichtwerkzeug beim Abrichten über die erste Drehachse (A1) des Bearbeitungskopfes und eine weitere lineare Bewegungsachse des Bearbeitungskopfes erzeugt werden, muß die Abrichteinheit selbst keine Bewegungsachsen aufweisen. Erfindungsgemäß kann die Abrichteinheit daher zumindest hinsichtlich linearer Bewegungen starr an einem ohnehin vorhandenen Element der Verzahnungsschleifmaschine angeordnet werden, beispielsweise am Schlitten oder an dem Maschinenständer, an welchem der Schlitten angeordnet ist. In besonders vorteilhafter Weise ist die Abrichteinheit dabei zumindest hinsichtlich linearer Bewegung starr am Schlitten, welcher den Bearbeitungskopf der Verzahnungsschleifmaschine trägt, angeordnet.

Die vorliegende Erfindung umfaßt daher weiterhin eine Verzahnungsschleifmaschine mit einer Werkstückaufnahme und einer Werkzeugaufnahme, wobei die Werkstückaufnahme um eine dritte Drehachse (C1) in Rotation versetzbar ist, wobei die Werkzeugaufnahme um eine erste Drehachse (B1) in Rotation versetzbar und an einem Bearbeitungskopf angeordnet ist, welcher über eine Schwenkachse (A1) schwenkbar ist, wobei ein in der Werkstückaufnahme eingespanntes Werkstück durch ein in der Werkzeugaufnahme eingespanntes Werkzeug bearbeitbar ist, und wobei der Bearbeitungskopf auf einem Schlitten angeordnet ist, welcher über eine zweite lineare Bewegungsachse (Z1) parallel zur dritten Drehachse (C1) bewegbar ist. Die Verzahnungsschleifmaschine weist dabei weiterhin eine Abrichteinheit mit einer Abrichtwerkzeugaufnahme auf, welche um eine zweite Drehachse (B2) in Rotation versetzbar ist, so daß ein in der Abrichtwerkzeugaufnahme aufgenommenes Abrichtwerkzeug zum Abrichten eines in der Werkzeugaufnahme eingespannten Werkzeugs einsetzbar ist. Erfindungsgemäß ist dabei vorgesehen, daß die Abrichteinheit zumindest hinsichtlich linearer Bewegungen starr an dem Schlitten, welcher den Bearbeitungskopf der Verzahnungsschleifmaschine trägt, angeordnet ist. Eine solche Verzahnungsschleifmaschine ist besonders einfach aufgebaut, wobei dennoch ein Abrichten des in der Werkzeugaufnahme eingespannten Werkzeugs über die Abrichteinheit gemäß dem erfindungsgemäßen Verfahren möglich ist.

Vorteilhafterweise ist der Bearbeitungskopf mit der Werkzeugaufnahme dabei über eine erste lineare Bewegungsachse (V1) relativ zum Schlitten bewegbar, so dass zum Abrichten mittels der Schwenkachse (A1) und der ersten linearen Bewegungsachse (V1) Relativbewegungen mit zwei unterschiedlichen Freiheitsgraden zwischen der Werkzeugaufnahme und der Abrichtwerkzeugaufnahme erzeugbar sind.

In vorteilhafter Weise weist die erfindungsgemäße Verzahnungsschleifmaschine dabei eine Steuerung zum automatischen Ansteuern der Bewegungsachsen der Verzahnungsschleifmaschine während des Bearbeitens eines Werkstücks und/oder während des Abrichtens eines Werkzeugs auf. In vorteilhafter Weise weist diese Steuerung dabei eine Funktion zur Durchführung eines erfindungsgemäßen Verfahrens auf, wie dies bereits oben dargestellt wurde.

In vorteilhafter Weise ist die Verzahnungsschleifmaschine dabei weiterhin so aufgebaut, wie dies bereits oben dargestellt wurde.

Weiterhin kann der Schlitten an einem Maschinenständer angeordnet sein, welcher über eine dritte lineare Bewegungsachse (X1) senkrecht zur Drehachse (C1) der Werkstückaufnahme verfahrbar ist.

Weiterhin kann eine zweite Abrichteinheit vorgesehen sein, welche über eine vierte lineare Bewegungsachse (Z3) auf die erste Abrichteinheit zu- und von dieser wegbewegt werden kann, um den Abstand zwischen den in der Abrichtwerkzeugaufnahmen der ersten und zweiten Abrichteinheiten aufnehmbar Abrichtwerkzeuge zu verändern. Dies kann insbesondere zum zweiseitigen Abrichten eines Werkzeugs eingesetzt werden. Dabei müssen die Drehachsen der beiden Abrichteinheiten nicht notwendiger Weise parallel ausgerichtet sein. In einem bevorzugten Ausführungsbeispiel ist dies jedoch der Fall.

Vorteilhafterweise wird auch das oben beschriebene Verfahren zum Abrichten eines Werkzeuges auf der soeben beschriebenen Verzahnungsschleifmaschine durchgeführt.

Die vorliegende Erfindung umfaßt unabhängig von der bisher beschriebenen Verzahnungsschleifmaschine und dem bisher beschriebenen Verfahren eine Verzahnungsschleifmaschine mit einer Werkstückaufnahme und zwei Werkzeugaufnahmen zur Aufnahme von separaten Werkzeugen, wobei die Werkzeugaufnahmen jeweils um eine Drehachse in Rotation versetzbar sind und an einem gemeinsamen Bearbeitungskopf angeordnet sind, welcher über eine Schwenkachse (A1) schwenkbar ist, wobei ein in der Werkstückaufnahme eingespanntes Werkstück durch in den Werkzeugaufnahmen eingespannte Werkzeuge bearbeitbar ist. Dabei ist erfindungsgemäß vorgesehen, daß die beiden Werkzeugaufnahmen an von der Schwenkachse (A1) abgewandten Seiten des Bearbeitungskopfes angeordnet sind. Anders als bei bekannten Doppelschleifköpfen sind die beiden Werkzeugaufnahmen damit nicht zur gemeinsamen Schwenkachse (A1) des Bearbeitungskopfes hin ausgerichtet, sondern zeigen jeweils von dieser weg. Hierdurch lassen sich die Werkzeuge leichter an den Werkzeugaufnahmen montieren und weisen zudem einen größeren Abstand von der Schwenkachse (A1) auf. Hierdurch ergeben sich Vorteile sowohl bei einer abwechselnden Bearbeitung des Werkstücks durch die beiden Werkzeuge, als auch beim Abrichten der Werkzeuge.

Vorteilhafterweise sind die beiden Werkzeugaufnahmen dabei auf gegenüberliegenden Seiten des Bearbeitungskopfes angeordnet. Insbesondere kann dabei vorgesehen sein, daß die Werkzeugaufnahmen auf einer gemeinsamen Drehachse (B1) oder an parallelen Drehachsen angeordnet sind. Weiterhin kann vorgesehen sein, daß die beiden Werkzeugaufnahmen über einen gemeinsamen Antrieb angetrieben werden.

Weiterhin vorteilhafter Weise sind die beiden in den Werkzeugaufnahmen aufgenommenen Werkzeuge über mindestens eine gemeinsame Abrichteinheit abrichtbar. Vorteilhafterweise ist dabei nach dem Abrichten des ersten Werkzeugs das zweite Werkzeug durch ein Schwenken des Bearbeitungskopfes um die Schwenkachse (A1) zur Abrichteinheit bewegbar.

Bei dem erfindungsgemäßen Bearbeitungskopf mit zwei Werkzeugaufnahmen können somit mit nur zum geringfügigen Mehraufwand zwei Werkzeuge eingesetzt werden. Insbesondere können dabei zwei unterschiedliche Werkzeuge am Schleifkopf angeordnet werden, beispielsweise Werkzeuge mit unterschiedlich feinem Abrasivmaterial. So kann das erste Werkzeug beispielsweise zum Schruppen eingesetzt werden, während das zweite Werkzeug zum Schlichten eingesetzt wird. Durch eine entsprechende Anpassung der Körnung an die jeweilige Bearbeitungsoperation ergibt sich so eine Leistungsverbesserung, da zum Schruppen eine grobe Körnung und zum Schlichten eine feine Körnung eingesetzt werden kann.

Die zuletzt beschriebene Verzahnungsschleifmaschine kann so aufgebaut sein, wie dies bereits oben bezüglich der vorher beschriebenen Verzahnungsschleifmaschinen näher dargestellt wurde. Insbesondere kann der Bearbeitungskopf mit den Werkzeugaufnahmen über eine erste lineare Bewegungsachse (V1) relativ zur Abrichteinheit bewegbar sein. Weiterhin kann die Werkstückaufnahme um eine dritte Drehachse (C1) in Rotation versetzbar sein und der Bearbeitungskopf auf einem Schlitten angeordnet sein, welcher über eine zweite lineare Bewegungsachse (Z1) parallel zur Drehachse (C) der Werkstückaufnahme bewegbar ist. Weiterhin kann vorgesehen sein, daß der Schlitten an einem Maschinenständer angeordnet ist, welcher über eine dritte lineare Bewegungsachse (X1) senkrecht zur Drehachse (C1) der Werkstückaufnahme verfahrbar ist.

Ebenso kann die Verzahnungsschleifmaschine eine Steuerung aufweisen, wie sie bereits oben beschrieben wurde. Weiterhin kann auch das oben beschriebene Verfahren zum Abrichten eines Werkzeuges auf der soeben beschriebenen Verzahnungsschleifmaschine durchgeführt werden.

Bei der vorliegenden Erfindung können als Werkzeuge insbesondere Schleifscheiben und/oder Schleifschnecken zum Einsatz kommen. Die Werkzeuge bestehen dabei vorteilhafterweise aus miteinander verbundenen Schleifkörnern. Das Abrichten der Werkzeuge erfolgt dabei durch Abtrag von Korn und Bindung des Schleifwerkzeugs mit dem Ziel, den Schleifbelag zur Erzeugung eines gewünschten Profils und der erforderlichen Profilgenauigkeit zu verändern. Insbesondere können dabei Schleifkörner aus Korund, CBN oder Siliziumcarbit eingesetzt werden.

Als Abrichtwerkzeug kommen vorteilhafterweise Abrichtscheiben zum Einsatz. Insbesondere kann es sich bei einer solchen Abrichtscheibe um eine Diamantscheibe bzw. um einen hartstoffbeschichteten Metallgrundkörper handeln.

Die vorliegende Erfindung wird nun anhand von Zeichnungen sowie Ausführungsbeispielen näher beschrieben.

Dabei zeigen:
- Fig. 1:: ein erstes Ausführungsbeispiel einer erfindungsgemäßen Verzahnungsschleifmaschine mit einer Abrichteinheit,
- Fig. 2:: ein zweites Ausführungsbeispiel einer erfindungsgemäßen Verzahnungsschleifmaschine mit zwei Abrichteinheiten,
- Fig. 2a:: ein drittes Ausführungsbeispiel einer erfindungsgemäßen Verzahnungsschleifmaschine mit zwei Abrichteinheiten und einem Bearbeitungskopf zur Bearbeitung von Innenverzahnungen,
- Fig. 3:: eine Prinzipdarstellung eines ersten Ausführungsbeispiels eines erfindungsgemäßen Verfahrens,
- Fig. 3a und 3b:: eine Prinzipdarstellung eines abgewandelten ersten Ausführungsbeispiels eines erfindungsgemäßen Verfahrens, bei welchem eine andere Anordnung der Abrichteinheit zum Einsatz kommt als in Fig. 3,
- Fig. 4:: eine Prinzipdarstellung eines zweiten Ausführungsbeispiels eines erfindungsgemäßen Verfahrens, bei welchem zwei Abrichteinheiten zum Einsatz kommen,
- Fig. 4a:: eine Prinzipdarstellung eines dritten Ausführungsbeispiels eines erfindungsgemäßen Verfahrens, bei welchem ebenfalls zwei Abrichteinheiten zum Einsatz kommen, deren Achsen jedoch nicht parallel zueinander angeordnet sind,
- Fig. 5:: eine Prinzipdarstellung eines vierten Ausführungsbeispiel eines erfindungsgemäßen Verfahrens,
- Fig. 6:: ein Ausführungsbeispiel einer Verzahnungsschleifmaschine mit zwei am Schleifkopf angeordneten Werkzeugaufnahmen sowie ein Ausführungsbeispiel eines entsprechenden Verfahrens zum Abrichten,
- Fig. 7:: ein weiteres Ausführungsbeispiel einer erfindungsgemäßen Verzahnungsschleifmaschine mit zwei am Bearbeitungskopf angeordneten Werkzeugaufnahmen, und
- Fig. 8:: ein weiteres Ausführungsbeispiel eines erfindungsgemäßen Verfahrens, bei welchem zur Erzeugung komplexer Profile weitere Freiheitsgrade der Verzahnungsschleifmaschine zum Einsatz kommen.

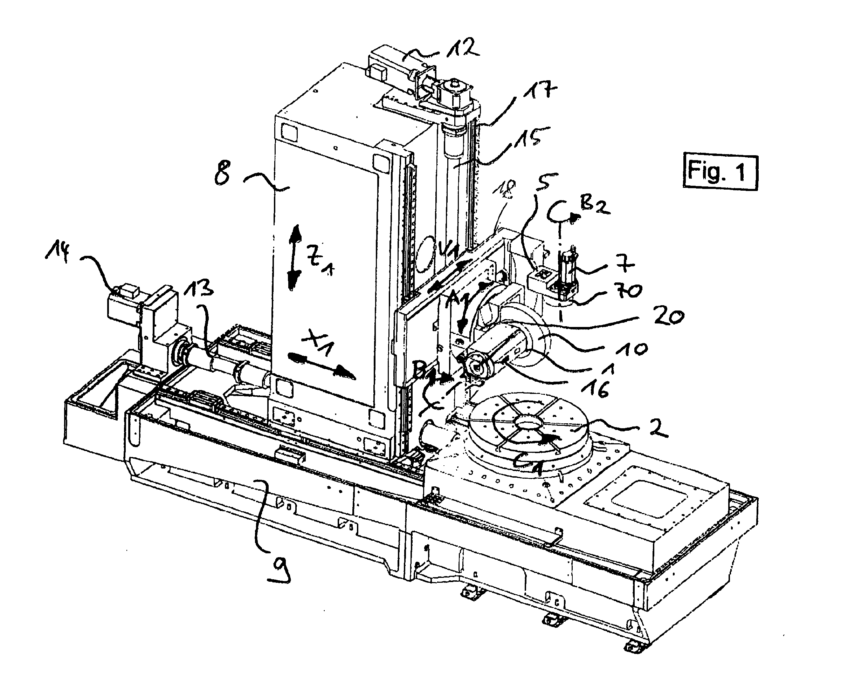

Figur 1 zeigt ein erstes Ausführungsbeispiel einer erfindungsgemäßen Verzahnungsschleifmaschine. Diese weist eine Werkstückaufnahme 2 zur Aufnahme eines nicht dargestellten Werkstücks sowie eine Werkstückspannvorrichtung auf. Die Werkstückaufnahme ist dabei um eine Drehachse (B1) rotierbar, wofür ein entsprechender Antrieb vorgesehen ist.

Die Verzahnungsschleifmaschine weist weiterhin eine Werkzeugaufnahme 1 zur Aufnahme eines Werkzeugs 10 auf. Bei dem Werkzeug handelt es sich dabei um ein Schleifwerkzeug, mittels welchem ein in der Werkstückaufnahme angeordnetes Werkstück bearbeitet werden kann. Insbesondere kann das Werkzeug dabei zur Hartfeinbearbeitung des Werkstücks eingesetzt werden. Die Werkzeugaufnahme mit dem Werkzeug 10 ist hierfür über einen Antrieb 16 um eine Drehachse (B1) rotierbar.

Die Werkzeugaufnahme 1 ist an einem Bearbeitungskopf 20 angeordnet, welcher über mehrere Bewegungsachsen der Verzahnungsschleifmaschine relativ zur Werkstückaufnahme 2 bewegbar ist. Die Bewegungsachsen (Z1, V1, A1) erlauben die zur Bearbeitung des Werkstücks während des Schleifvorgangs notwendigen Relativbewegungen zwischen dem Werkzeug 10 und dem Werkstück. Bei dem Werkzeug 10 handelt es sich im Ausführungsbeispiel um eine Schleifscheibe. Alternativ wäre auch eine Schleifschnecke denkbar.

Der Bearbeitungskopf 20 ist dabei um eine Schwenkachse (A1) schwenkbar. Die Schwenkachse (A1) erlaubt es während der Bearbeitung eines in der Werkstückaufnahme 2 angeordneten Werkstücks, den Anstellwinkel des Werkzeugs relativ zum Werkstück einzustellen, um z. B. Schrägverzahnungen zu erzeugen. Die Schwenkachse (A1) ist dabei parallel zur Zustellachse (X1) des Werkzeugs angeordnet.

Der Bearbeitungskopf 20 ist weiterhin über eine zweite lineare Bewegungsachse (Z1) in einer Richtung parallel zur Drehachse (C1) der Werkstückaufnahme 2 verfahrbar. Hierfür ist eine Führung 17 vorgesehen, an welcher ein Schlitten 18 angeordnet ist, der den Bearbeitungskopf 20 trägt. Die Bewegungsachse (Z1) ist dabei an einem Maschinenständer 8 angeordnet, welcher seinerseits über eine lineare Bewegungsachse (X1) radial zur Drehachse (C1) der Werkstückaufnahme bewegt werden kann.

Zur Bewegung des Schlittens in Z1-Richtung ist dabei im Ausführungsbeispiel eine Kugelrollspindel 15 sowie ein Antrieb 12 vorgesehen. Zur Bewegung des Maschinenständers 8 ist wiederum eine Kugelrollspindel 13 und ein entsprechender Antrieb 14 vorgesehen. Der Maschinenständer 8 ist dabei über eine entsprechende Führung an einem Maschinenbett 9, an welchem auch die Werkstückaufnahme 2 angeordnet ist, verschiebbar gelagert. Alternativ könnte auch die Werkstückaufnahme 2 in X-Richtung verschiebbar am Maschinenbett 9 angeordnet sein.

Der Bearbeitungskopf 20 ist über die erste und die zweite lineare Bewegungsachse (V1) und (Z1) in einer Ebene tangential zur Drehachse (C1) bewegbar. Im hier gezeigten Ausführungsbeispiel ist dabei die erste Bewegungsachse (V1) direkt auf dem Schlitten, welcher in Z1-Richtung bewegbar ist, angeordnet. Die zweite lineare Bewegungsachse (Z1) steht dabei senkrecht auf der ersten linearen Bewegungsachse (V1). Die erste lineare Bewegungsachse (V1) ist dabei zwischen dem Schlitten 18 und der Schwenkachse (A1) angeordnet.

In einem alternativen Ausführungsbeispiel könnte die Drehachse (A1) auch zwischen dem Schlitten 18 und der ersten linearen Bewegungsachse (V1) angeordnet sein. Insbesondere könnte dabei die erste lineare Bewegungsachse (V1) parallel zur Drehachse (B1) des Bearbeitungskopfes angeordnet sein und eine Verschiebung des Werkzeugs in Richtung seiner Drehachse (B1) ermöglichen.

Weiterhin ist eine Abrichteinheit 7 vorgesehen, welche eine um eine Drehachse (B2) rotierbare Abrichtwerkzeugaufnahme aufweist. Hierdurch kann das darin aufgenommene Abrichtwerkzeug 70 über einen entsprechenden Antrieb der Abrichteinheit in Rotation versetzt werden.

Das Abrichten des Werkzeugs 10 über das Abrichtwerkzeug 70 erfolgt dabei, indem sowohl das Werkzeug 10 als auch das Abrichtwerkzeug 70 um ihre jeweiligen Drehachsen in Rotation versetzt werden, um einen entsprechenden Materialabtrag zu ermöglichen, wobei das gewünschte Profil des Werkzeugs 10 durch eine Relativbewegung zwischen Abrichteinheit 7 und Bearbeitungskopf 20 über Bewegungsachsen der Verzahnungsschleifmaschine erfolgt.

Gemäß der vorliegenden Erfindung ist hierfür vorgesehen, daß der Bearbeitungskopf während des Abrichtvorgangs in Abhängigkeit von dem zu erzeugenden Profil des Werkzeugs um die Schwenkachse (A1) verschwenkt und über die erste lineare Bewegungsachse (V1) linear bewegt wird, so daß die zur Erzeugung des gewünschten Profils notwendigen Relativbewegungen zwischen Abrichtwerkzeug und Werkzeug durch die Überlagerung der Bewegung der Schwenkachse (A1) und der ersten linearen Bewegungsachse (V1) erzeugt werden.

Insbesondere kann dabei vorgesehen sein, daß sämtliche zur Erzeugung gewünschten Profile notwendigen Relativbewegungen über diese beiden Achsen erzeugt werden.

Dies ermöglicht es, wie im Ausführungsbeispiel dargestellt, die Abrichteinheit 7 starr am Schlitten 18 der Verzahnungsschleifmaschine anzuordnen. Im Ausführungsbeispiel ist die Abrichteinheit 7 dabei seitlich neben dem Bearbeitungskopf 20 am Schlitten 18 angeordnet. Im Ausführungsbeispiel verläuft die Drehachse (B2) der Abrichteinheit 7 dabei vertikal. Diese Ausrichtung ist jedoch nicht zwingend. Alternativ wäre z.B. auch eine Anordnung der Abrichteinheit 7 mit horizontaler oder geneigter Drehachse (B2) denkbar.

Figur 1 zeigt das Ausführungsbeispiel der erfindungsgemäßen Verzahnungsschleifmaschine dabei in einer Schleifposition, in welcher die Drehachse (B1) durch eine entsprechende Einstellung der A1-Achse in Abhängigkeit vom Schrägungswinkel der zur erzeugenden Verzahnung angeordnet ist. Dabei ist das Werkzeug 10 entfernt von dem Abrichtwerkzeug 70 angeordnet. Zum Abrichten kann der Bearbeitungskopf dann über die Achsen V1 und A1 in eine Abrichtposition verfahren werden, in welcher das Abrichtwerkzeug 70 mit dem Werkzeug 10 in Eingriff gelangt.

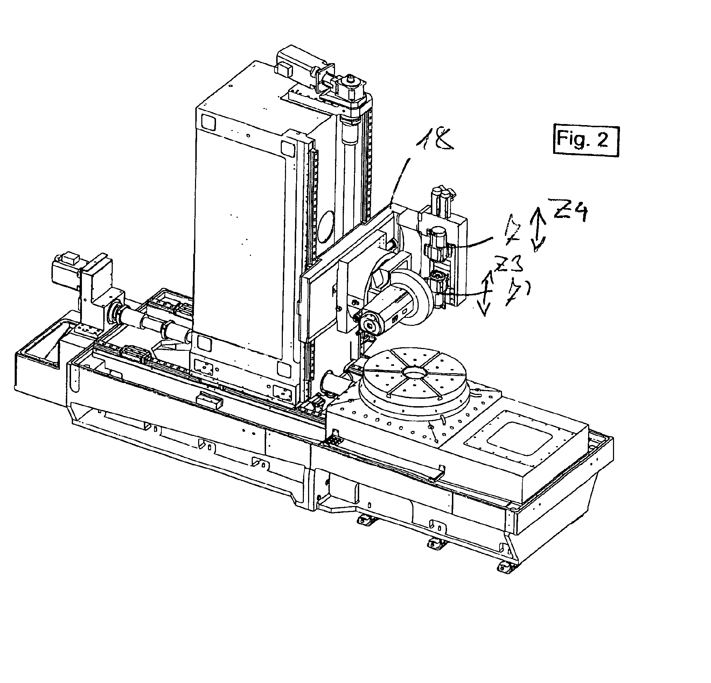

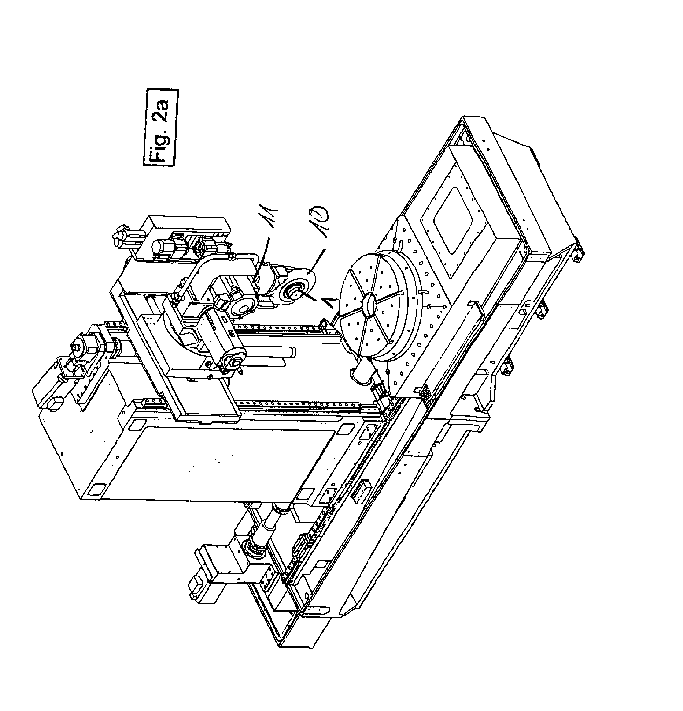

In Figur 2 ist ein zweites Ausführungsbeispiel einer erfindungsgemäßen Verzahnungsschleifmaschine gezeigt, welches vom Aufbau der Verzahnungsschleifmaschine dem in Figur 1 gezeigten Ausführungsbeispiel entspricht. Dabei sind zwei Abrichteinheiten 7 und 7' am Schlitten 18 angeordnet, welche ein beidseitiges Abrichten der Schleifscheibe 10 ermöglichen. Hierfür ist zumindest eine der beiden Abrichteinheiten 7 und 7' über eine lineare Bewegungsachse (Z3) auf die andere Abrichteinheit zu bewegbar, um so den Abstand zwischen den beiden Abrichtwerkzeugen einstellen zu können. Alternativ könnten auch beide Abrichteinheiten 7 und 7' jeweils über separate, insbesondere parallele lineare Bewegungsachsen bewegbar sein.

Das in Figur 2a gezeigte dritte Ausführungsbeispiel einer erfindungsgemäßen Verzahnungsschleifmaschine entspricht dabei im Wesentlichen dem in Figur 2 gezeigten Ausführungsbeispiel, ist aber mit einem Bearbeitungskopf zur Bearbeitung einer Innenverzahnung ausgestattet. Der Bearbeitungskopf weist dabei einen Arm 11 auf, an welchem die Werkzeugaufnahme 1 zur Aufnahme des Werkzeugs 10 angeordnet ist. Der Arm 11 sorgt dabei dafür, daß das Werkzeug 10 in eine unter dem Bearbeitungskopf angeordnete Innenverzahnung hineingefahren werden kann.

Die erfindungsgemäße Verzahnungsschleifmaschine weist weiterhin eine Steuerung auf, durch welche die NC-Achsen der Verzahnungsschleifmaschine automatisiert angesteuert werden können. Insbesondere weist die Steuerung dabei eine Funktion auf, über welche ein erfindungsgemäßes Abrichtverfahren durchgeführt werden kann. Insbesondere steuert die Steuerung dabei die A1-Achse und die V1-Achse während des Abrichtvorgangs zur Erzeugung des gewünschten Profils an.

Alternativ zu den in Figuren 1 und 2 gezeigten Ausführungsbeispielen, bei welchen die Abrichteinheiten am Schlitten 18 angeordnet sind und die Relativbewegungen zur Erzeugung des gewünschten Profils beim Abrichten über die A1- und die V1-Achse erzeugt werden, könnte die Abrichteinheit auch am Maschinenständer angeordnet sein. Hierdurch stünde zusätzlich die Z1-Achse für Relativbewegungen zwischen der Abrichteinheit und dem Bearbeitungskopf zur Verfügung. Erfindungsgemäß könnte damit während des Abrichtvorgangs neben einer Bewegung des Bearbeitungskopfes um die A1-Achse zusätzlich Relativbewegungen durch eine Bewegung des Bearbeitungskopfes über die V1-Achse und/oder die Z1-Achse erfolgen. Hierdurch könnten ggf. auch komplexere Profile erzeugt werden.

Alternativ oder zusätzlich könnte zudem vorgesehen sein, daß die Abrichteinheit eine Schwenkachse aufweist, so daß ein weiterer Freiheitsgrad beim Abrichten zur Verfügung steht. Ebenso könnte vorgesehen sein, daß die Abrichteinheit über eine lineare Bewegungsachse verfahrbar ist, bspw. in Z4-Richtung.

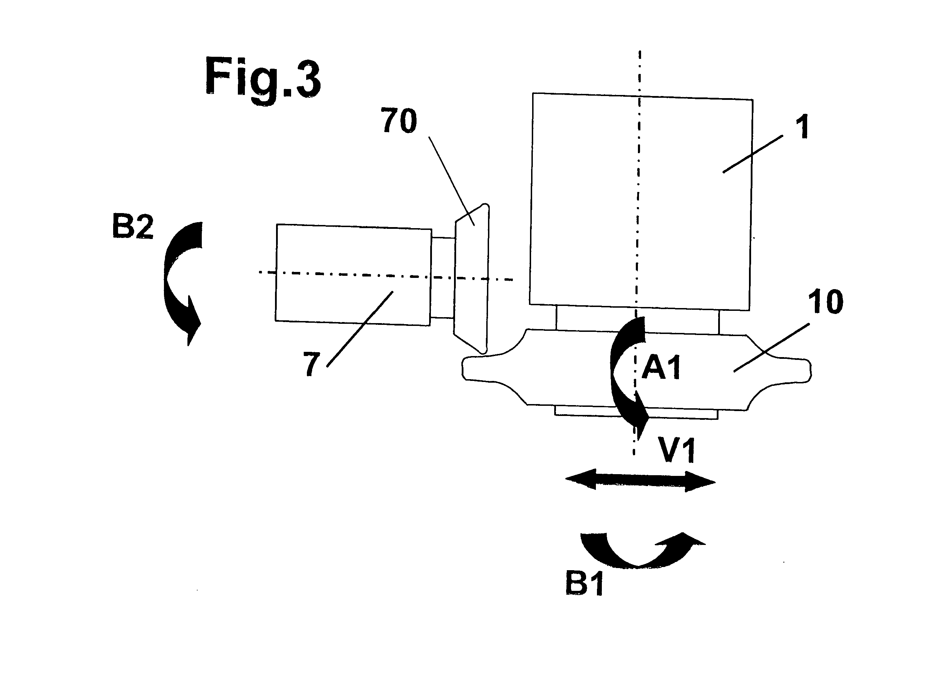

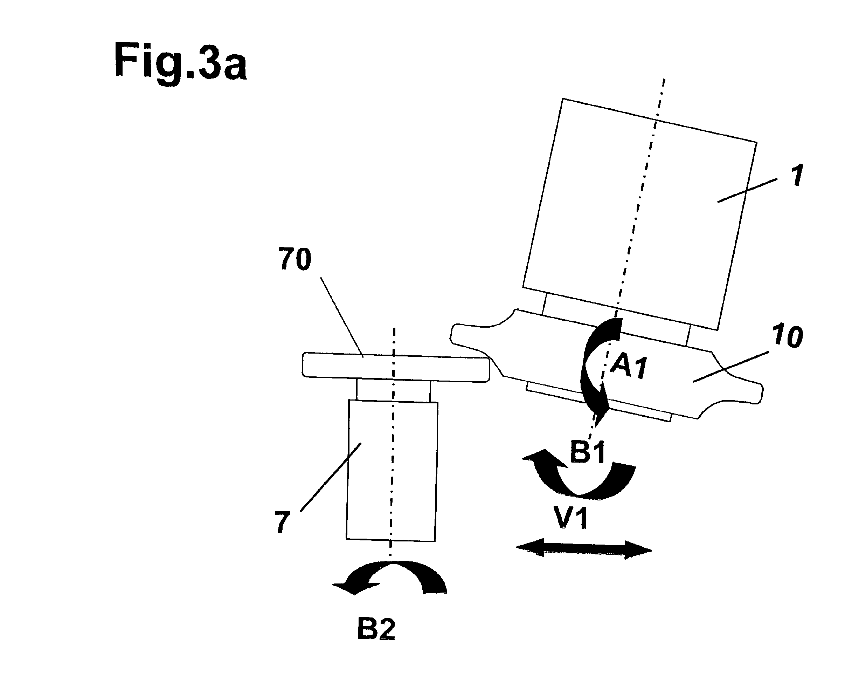

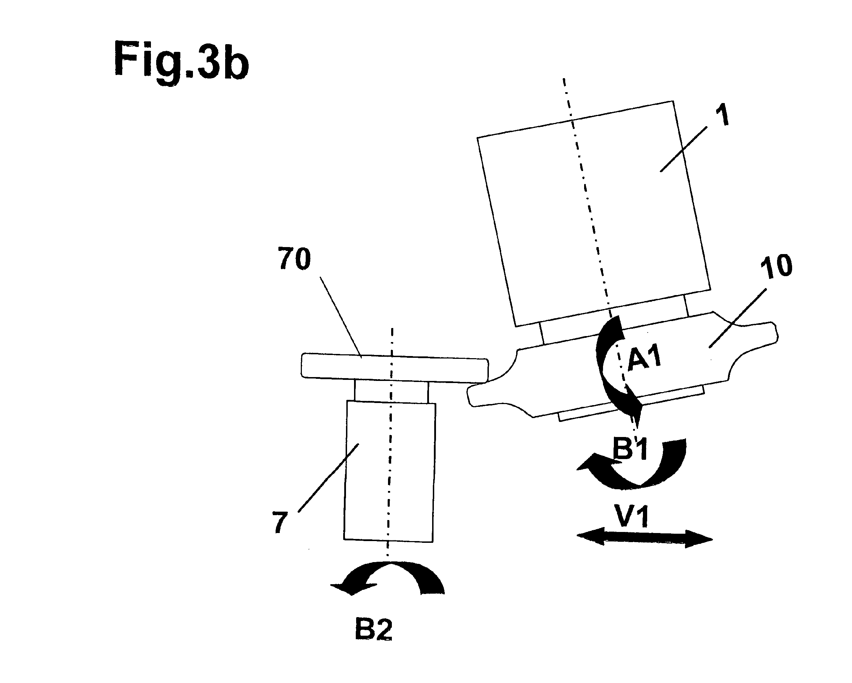

In Figur 3 ist ein erstes Ausführungsbeispiel eines erfindungsgemäßen Verfahrens zum Abrichten eines Werkzeugs 10 über ein Abrichtwerkzeug 70 dargestellt. Die Drehachse B2 der Abrichteinheit 7 ist dabei horizontal ausgerichtet, die B1-Achse des Bearbeitungskopfes 20 im Wesentlichen senkrecht. Die V1-Achse erlaubt es, das Werkzeug 10 gemäß dem gewünschten Profil in horizontaler Richtung am Abrichtwerkzeug 70 entlang zu führen. Durch ein Verschwenken des Bearbeitungskopfes 20 um die A1-Achse kann nun zusätzlich eine Bewegung in vertikaler Richtung erzeugt werden, so daß eine Erzeugung eines zweidimensionalen Profils möglich ist. Die beim Verschwenken des Bearbeitungskopfes zusätzlich erzeugte Bewegung in horizontaler Richtung muß dann durch eine entsprechende Gegenbewegung der V1-Achse ausgeglichen werden.

Durch die Überlagerung der Schwenkbewegung durch die A1-Achse und der linearen Bewegung durch die V1-Achse ist so die Erzeugung beliebiger zweidimensionaler Profile möglich.

In Figuren 3a und 3b ist ein alternatives Ausführungsbeispiel eines erfindungsgemäßen Verfahrens gezeigt, bei welchem die in Fig. 1 gezeigte Anordnung der Abrichteinheit zum Einsatz kommt, d.h. eine Abrichteinheit, deren Drehachse B2 vertikal ausgerichtet ist. In Fig. 3 ist dabei dargestellt, wie durch Verfahren des Bearbeitungskopfes um die B1 und die V1 Achse zunächst das gewünschte Profil auf einer Seite des Werkzeuges 10 hergestellt wird, indem diese Seite an dem Abrichtwerkzeug 70 entlang geführt wird. In Fig. 3b wird dann das gewünschte Profil auf der anderen Seite des Werkzeuges 10 in analoger Weise hergestellt .

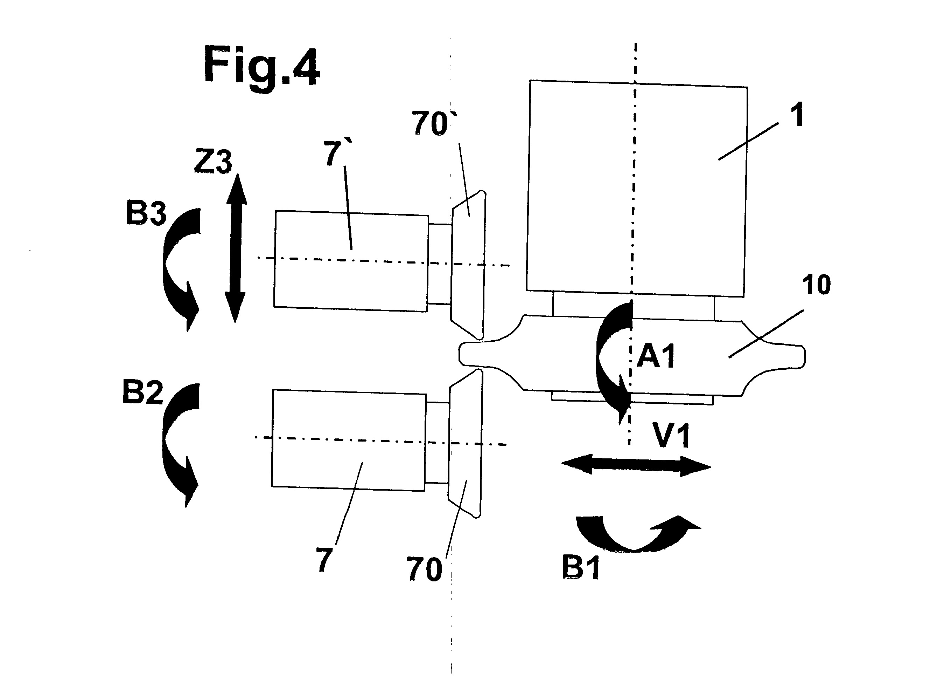

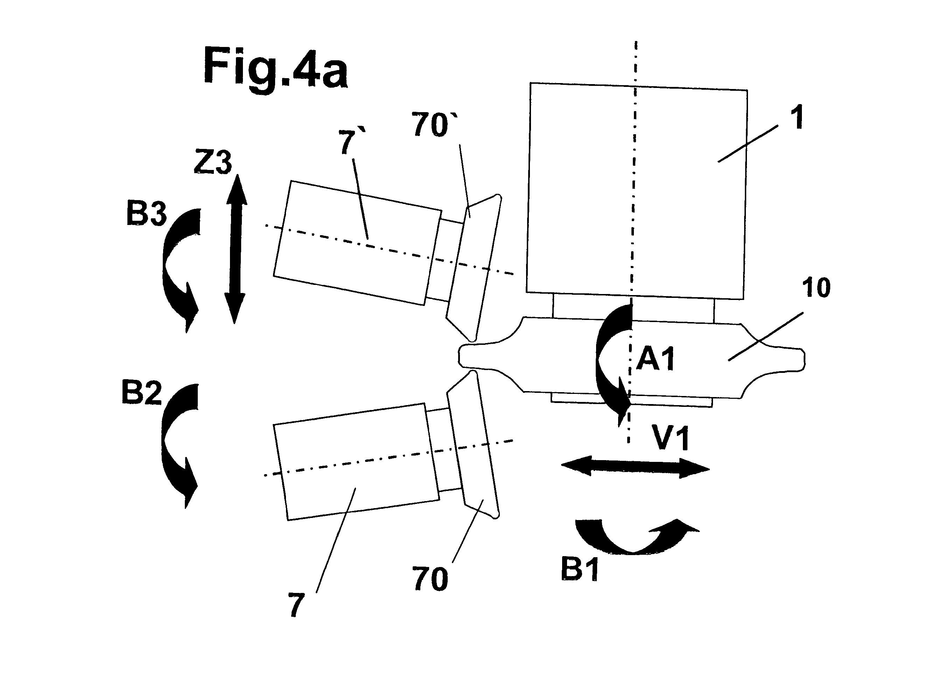

In Figur 4 ist ein zweites Ausführungsbeispiel eines erfindungsgemäßen Verfahrens gezeigt, bei welchem eine zweite Abrichteinheit 7' mit einem zweiten Abrichtwerkzeugs 70' zum Einsatz kommt. Die zweite Abrichteinheit 7' weist eine Drehachse B3 auf, um welche das Abrichtwerkzeug 70' rotiert werden kann. Die zweite Abrichteinheit 7' ist dabei um eine lineare Achse Z3 linear verschiebbar, so daß der Abstand zwischen den beiden Abrichtwerkzeugen 70 und 70' eingestellt werden kann. Hierdurch ist eine beidseitige Bearbeitung des Werkzeugs 10 möglich. Der Abstand zwischen den beiden Abrichtwerkzeugen 70 und 70' wird dabei auf die gewünschte Dicke des Werkzeugs 10 in der jeweiligen Eingriffsposition eingestellt, während alle übrigen Relativbewegungen zwischen Werkzeug 10 und Abrichtwerkzeugen 70 und 70' über die V1- und A1-Achse erfolgen.

Bei dem in Figur 4 gezeigten Ausführungsbeispiel verlaufen die Drehachsen B2 und B3 der beiden Abrichteinheiten parallel, während die lineare Bewegungsachse Z3 senkrecht auf diesen beiden Drehachsen steht. Alternativ können die beiden Drehachsen B2 und B3 auch in einem Winkel zueinander verlaufen, wie dies in Figur 4a dargestellt ist. Alternativ könnte die Drehachse B2 auch senkrecht auf der Drehachse B3 stehen.

Alternativ zu den in Figuren 3 und 4 gezeigten Anordnungen könnte die Drehachse B2 der Abrichteinheit 7 beim Abrichten auch im Wesentlichen parallel zur Drehachse B1 des Werkzeugs 10 angeordnet sein. Auch in diesem Fall ließe sich durch eine Überlagerung der Bewegungen der V1-Achse und der A1-Achse das gewünschte Profil erzeugen.

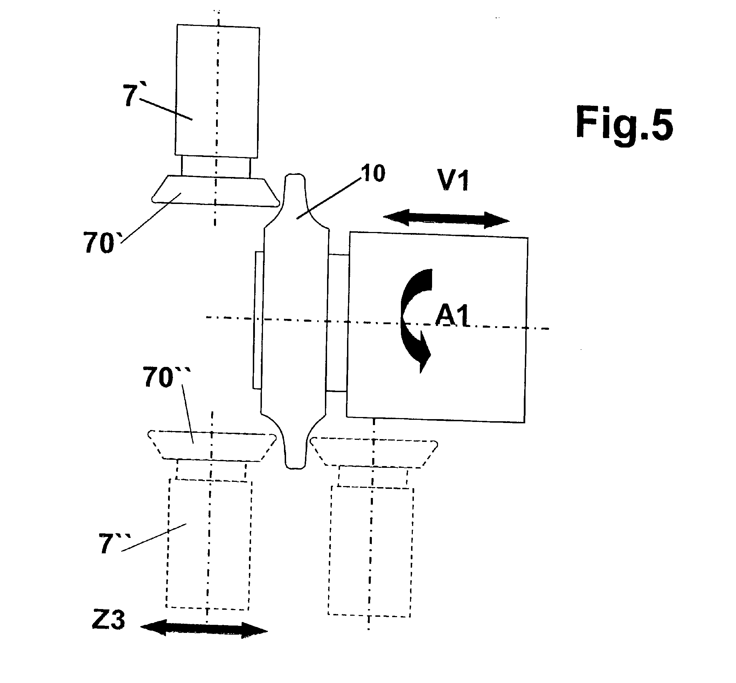

Weiterhin kann, wie in Figur 5 gezeigt, der Abrichtvorgang auch mit einer Ausrichtung der Drehachse B1 im Wesentlichen parallel zur linearen Bewegungsachse V1 erfolgen. Selbstverständlich ist auch hier wieder ein zweiseitiges Abrichten der Schleifscheibe 10 möglich, wie dies gestrichelt unten dargestellt ist.

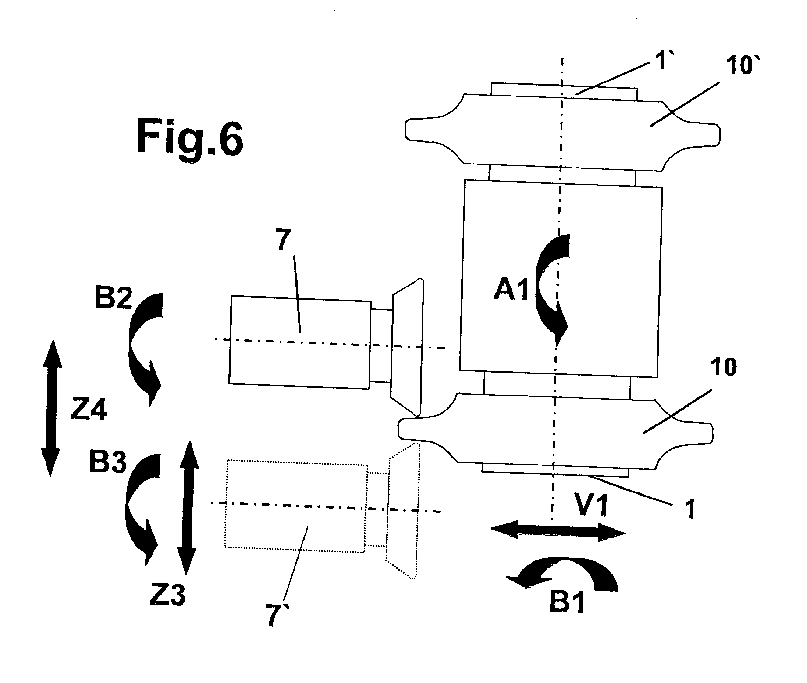

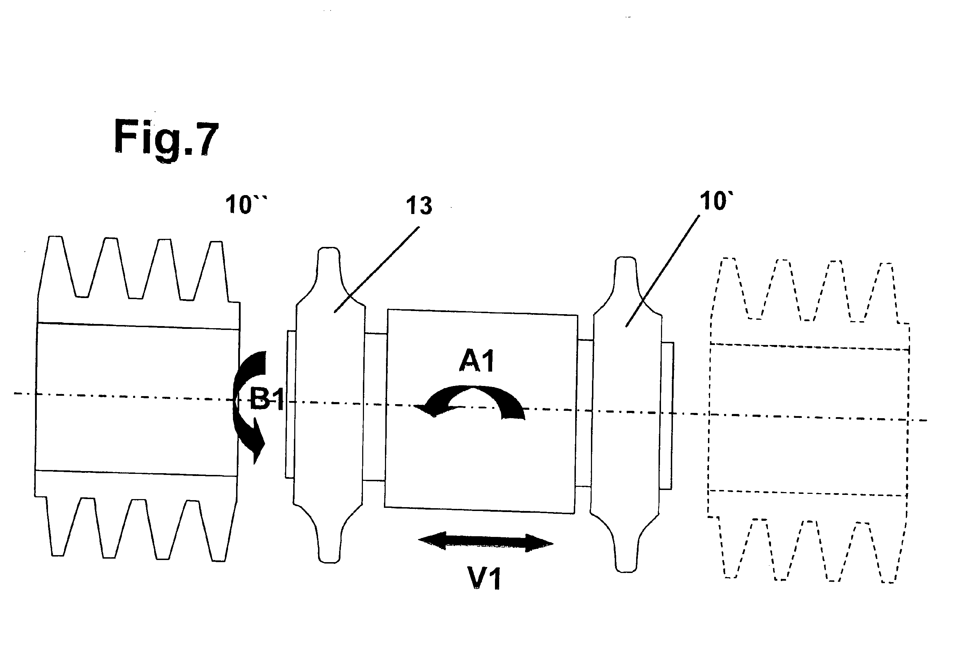

In Figuren 6 und 7 ist nun ein Ausführungsbeispiel des zweiten Aspekts der vorliegenden Erfindung dargestellt, wobei dieser in Figur 6 mit dem ersten Aspekt kombiniert ist.

Dabei ist ein Bearbeitungskopf vorgesehen, welcher zwei Werkzeugaufnahmen 1 und 1' aufweist. Die beiden Werkzeugaufnahmen sind auf gegenüberliegenden Seiten des Bearbeitungskopfes bzw. der Schwenkachse A1 mit ihren Wirkseiten nach außen angeordnet.

Die Anordnung der beiden Werkzeugaufnahmen ist dabei im Ausführungsbeispiel koaxial. Die beiden Werkzeugaufnahmen können dabei über einen gemeinsamen oder jeweils separate Antriebe antreibbar sein.

In den beiden Werkzeugaufnahmen sind ein erstes Werkzeug 10 und ein zweites Werkzeug 10' angeordnet. Das erste Werkzeug 10 kann dabei eine gröbere Körnung aufweisen als das zweite Werkzeug 10'. Insbesondere kann so das erste Werkzeug 10 zum Schruppen eingesetzt werden, das zweite Werkzeug 10' zum Schlichten.

Bei dem ersten und dem zweiten Werkzeug kann es sich dabei jeweils um Schleifscheiben handeln. Alternativ kann das erste und/oder zweite Werkzeug auch eine Schleifschnecke 10' sein, wie dies in Figur 7 dargestellt ist.

Die beiden Werkzeuge 10 und 10' können so nacheinander zum Bearbeiten eines Werkstücks in unterschiedlichen Bearbeitungsschritten eingesetzt werden. Alternativ ist auch denkbar, das eine Werkzeug abzurichten, während mit dem anderen Werkzeug ein Werkstück bearbeitet wird. In diesem Fall können auch zwei identische Werkzeuge eingesetzt werden.

In Figur 6 ist dabei eine Kombination des zweiten Aspekts mit dem ersten Aspekt der vorliegenden Erfindung gezeigt, d.h. eine Kombination des Bearbeitungskopfes mit den zwei Werkzeugaufnahmen mit einer starr am Schlitten angeordneten Abrichteinheit 7. Zum Abrichten des ersten Werkzeugs 10 bzw. des zweiten Werkzeugs 10' kann dabei der Bearbeitungskopf um die Schwenkachse A1 jeweils so verschwenkt werden, daß das jeweils abzurichtende Werkzeug mit dem Abrichtwerkzeug in Eingriff kommt. Die zum Erzeugen des gewünschten Profils notwendige Relativbewegung zwischen Abrichtwerkzeug und Werkzeug kann dann wiederum über die V1- und die A1-Achse hergestellt werden.

Wie in Figur 6 ebenfalls dargestellt, kann auch hier eine zweite Abrichteinheit 7' zum Einsatz kommen, um die jeweiligen Werkzeuge beidseitig abrichten zu können.

Alternativ wäre es dabei denkbar, beide Abrichteinheiten über eine lineare Bewegungsachse bewegbar zu machen, oder die beiden Abrichteinheiten 7 und 7' gemeinsam über eine weitere Z4-Achse bewegbar zu machen.

Der in Figuren 6 und 7 gezeigte erfindungsgemäße Bearbeitungskopf mit zwei Werkzeugaufnahmen ist dabei vorteilhafterweise an einer Verzahnungsschleifmaschine angeordnet, wie sie bereits in Bezug auf Figuren 1 und 2 näher beschrieben wurde. Insbesondere kann der Bearbeitungskopf dabei über zumindest eine Schwenkachse A1 geschwenkt und über zwei lineare Achse tangential zum Werkstück bewegt werden.

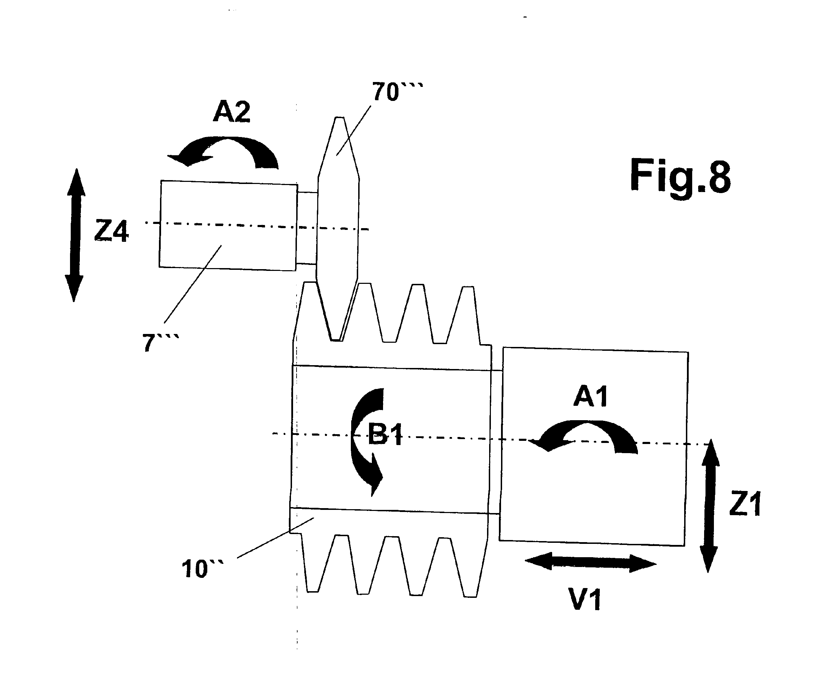

In Figur 8 ist ein weiteres Ausführungsbeispiel der vorliegenden Erfindung gezeigt, bei welchem als Werkzeug 10" eine Schleifschnecke eingesetzt wird. Soll dabei eine eingriffswinkelkorrigierte Schleifschnecke 10" eingesetzt werden, so werden zum Abrichten mehr als zwei Freiheitsgrade benötigt. Erfindungsgemäß kann daher vorgesehen sein, daß beim Abrichten zusätzlich zu dem Verschwenken des Bearbeitungskopfes um die A1-Achse zwei weitere Freiheitsgrade zum Einsatz kommen.

In einem ersten Ausführungsbeispiel kann hierzu neben der V1-Achse auch die Z1-Achse eingesetzt werden. Hierzu wird die Abrichteinheit 7"' nicht am Schlitten 18, sondern am Maschinenständer angeordnet.

Alternativ oder zusätzlich kann auch die Abrichteinheit 7"' selbst um eine Schwenkachse A2 verschwenkbar sein. Vorteilhafterweise steht die Schwenkachse A2 dabei senkrecht auf der Drehachse der Abrichteinheit 7"'.

Alternativ oder zusätzlich kann auch die Abrichteinheit 7"' selbst durch über eine Z4-Achse linear verfahrbar ausgeführt sein.

Die Ausführungsbeispiele der erfindungsgemäßen Verzahnungsschleifmaschine weisen vorteilhafterweise jeweils eine Steuerung zur Ansteuerung der jeweiligen Bewegungsachsen auf, wobei die Steuerung eine Funktion zum automatischen Durchführen der oben dargestellten Verfahren aufweist.

## Patentansprüche

1. Verfahren zum Abrichten eines Werkzeuges einer Verzahnungsschleifmaschine, welche eine Werkstückaufnahme und eine Werkzeugaufnahme aufweist,
wobei die Werkzeugaufnahme um eine erste Drehachse (B1) in Rotation versetzbar und an einem Bearbeitungskopf angeordnet ist, welcher über eine Schwenkachse (A1) schwenkbar und über eine erste lineare Bewegungsachse (V1) linear bewegbar ist,
wobei ein in der Werkstückaufnahme eingespanntes Werkstück durch ein in der Werkzeugaufnahme eingespanntes Werkzeug bearbeitet werden kann, wobei die Verzahnungsschleifmaschine weiterhin eine Abrichteinheit mit einer Abrichtwerkzeugaufnahme, welche um eine zweite Drehachse (B2) in Rotation versetzbar ist, aufweist,
wobei ein in der Abrichtwerkzeugaufnahme aufgenommenes Abrichtwerkzeug zum Abrichten eines in der Werkzeugaufnahme eingespannten Werkzeuges eingesetzt wird,
**dadurch gekennzeichnet,**
**dass** der Bearbeitungskopf während des Abrichtvorgangs in Abhängigkeit von dem zu erzeugenden Profil des Werkzeuges um die Schwenkachse (A1) verschwenkt und mit der ersten linearen Bewegungsachse (V1) linear bewegt wird, wobei die zur Erzeugung des gewünschten Profils notwendigen Relativbewegungen zwischen Abrichtwerkzeug und Werkzeug durch die Überlagerung der Bewegungen der Schwenkachse (A1) und der ersten linearen Bewegungsachse (V1) erzeugt werden.

2. Verfahren nach Anspruch 1, wobei die Schwenkachse (A1) und/oder erste lineare Bewegungsachse (V1) des Bearbeitungskopfes weiterhin genutzt wird, um das in der Werkzeugaufnahme aufgenommene Werkzeug aus einer Schleifposition in eine Abrichtposition an das Abrichtwerkzeug heranzufahren.

3. Verfahren nach Anspruch 1 oder 2, wobei die während des Abrichtvorgangs zur Erzeugung des gewünschten Profils notwendigen Relativbewegungen zwischen Abrichtwerkzeug und Werkzeug allein über eine Bewegung des Bearbeitungskopfes erzeugt werden und/oder wobei das in der Werkzeugaufnahme aufgenommene Werkzeug allein durch Bewegungen des Bearbeitungskopfes an das Abrichtwerkzeug herangefahren wird.

4. Verfahren nach einem der vorangegangenen Ansprüche, wobei die Werkstückaufnahme um eine dritte Drehachse (C) in Rotation versetzbar ist und der Bearbeitungskopf auf einem Schlitten angeordnet ist, welcher über eine zweite lineare Bewegungsachse (Z1) parallel zur Drehachse (C) der Werkstückaufnahme bewegbar ist, wobei vorteilhafterweise die Abrichteinheit am Schlitten angeordnet ist, insbesondere zumindest hinsichtlich linearer Bewegungen starr.

5. Verfahren nach Anspruch 4, wobei die erste lineare Bewegungsachse (V1) eine lineare Bewegung des Bearbeitungskopfes relativ zum Schlitten und/oder die Schwenkachse (A1) eine Schwenkbewegung des Bearbeitungskopfes relativ zum Schlitten erlaubt und/oder
wobei die erste lineare Bewegungsachse (V1) zwischen der Schwenkachse (A1) und dem Schlitten angeordnet ist oder die Schwenkachse (A1) zwischen der ersten linearen Bewegungsachse (V1) und dem Schlitten angeordnet ist und/oder wobei die erste lineare Bewegungsachse (V1) senkrecht auf der zweiten linearen Bewegungsachse (Z1) steht und/oder
wobei der Schlitten an einem Maschinenständer angeordnet ist, welcher über eine dritte lineare Bewegungsachse (X) senkrecht zur Drehachse (C) der Werkstückaufnahme verfahrbar ist.

6. Verfahren nach einem der vorangegangenen Ansprüche, wobei eine zweite Abrichteinheit vorgesehen ist, welche über eine vierte lineare Bewegungsachse (Z3) auf die erste Abrichteinheit zu und von dieser weg bewegt werden kann, um den Abstand zwischen den in den Abrichtwerkzeugaufnahen der ersten und zweiten Abrichteinheiten aufgenommenen Abrichtwerkzeuge zu verändern, wobei die beiden Abrichteinheiten insbesondere zum zweiseitigen Abrichten des Werkzeugs eingesetzt werden.

7. Verfahren nach einem der vorangegangenen Ansprüche, wobei eine zweite Abrichteinheit vorgesehen ist, welche über eine fünfte lineare Bewegungsachse (Z4) auf die erste, ebenfalls linear verfahrbare erste Abrichteinheit (Z3) zu und von dieser weg bewegbar ist, um den Abstand zwischen den in den Abrichtwerkzeugaufnahmen der ersten und zweiten Abrichteinheiten aufgenommenen Abrichtwerkzeuge zu verändern oder beide Abrichtwerkzeuge gemeinsam zu verfahren, wobei die beiden Abrichteinheiten insbesondere zum zweiseitigen Abrichten des Werkzeugs einsetzbar sind..

8. Verfahren nach einem der vorangegangenen Ansprüche, wobei der Bearbeitungskopf zwei vorteilhafterweise auf einer gemeinsamen Drehachse (B1) angeordnete und/oder über einen gemeinsamen Antrieb angetriebene Werkzeugaufnahmen zur Aufnahme von separaten Werkzeugen aufweist, wobei vorteilhafterweise die beiden in den zwei Werkzeugaufnahmen aufgenommenen Werkzeuge über mindestens eine gemeinsame Abrichteinheit abgerichtet werden, wobei vorteilhafterweise nach dem Abrichten des ersten Werkzeugs das zweite Werkzeug durch ein Schwenken des Bearbeitungskopfes um die Schwenkachse (A1) zur Abrichteinheit bewegt wird.

9. Verfahren zur Herstellung eines Zahnrads auf einer Verzahnschleifmaschine, bei welchem ein in einer Werkstückaufnahme eingespanntes Werkstück durch ein in der Werkzeugaufnahme eingespanntes Werkzeug bearbeitet wird, wobei das Abrichten des Werkzeuges nach einem Verfahren gemäß Ansprüchen 1 bis 6 erfolgt.

10. Verzahnungsschleifmaschine mit einer Steuerung zum automatischen Ansteuern der Bewegungsachsen der Verzahnungsschleifmaschine während des Bearbeitens eines Werkstückes und/oder während des Abrichtens eines Werkzeuges, wobei die Steuerung eine Funktion zur Durchführung eines Verfahrens nach einem der Ansprüche 1 bis 9 aufweist.

11. Verzahnungsschleifmaschine insbesondere nach Anspruch 10 mit einer Werkstückaufnahme und einer Werkzeugaufnahme,
wobei die Werkstückaufnahme um eine dritte Drehachse (C) in Rotation versetzbar ist,
wobei die Werkzeugaufnahme um eine erste Drehachse (B1) in Rotation versetzbar und an einem Bearbeitungskopf angeordnet ist, welcher über eine Schwenkachse (A1) schwenkbar ist, wobei ein in der Werkstückaufnahme eingespanntes Werkstück durch ein in der Werkzeugaufnahme eingespanntes Werkzeug bearbeitbar ist,
wobei der Bearbeitungskopf auf einem Schlitten angeordnet ist, welcher über eine zweite lineare Bewegungsachse (Z1) parallel zur dritten Drehachse (C) bewegbar ist,
wobei die Verzahnungsschleifmaschine weiterhin eine Abrichteinheit mit einer Abrichtwerkzeugaufnahme, welche um eine zweite Drehachse (B2) in Rotation versetzbar ist, aufweist, so dass ein in der Abrichtwerkzeugaufnahme aufgenommenes Abrichtwerkzeug zum Abrichten eines in der Werkzeugaufnahme eingespannten Werkzeuges einsetzbar ist,
und wobei die Verzahnungsschleifmaschine vorteilhafterweise eine Steuerung zum automatischen Ansteuern der Bewegungsachsen der Verzahnungsschleifmaschine während des Bearbeitens eines Werkstückes und/oder während des Abrichtens eines Werkzeuges aufweist,
**dadurch gekennzeichnet,**
**dass** die Abrichteinheit zumindest hinsichtlich linearer Bewegungen starr an dem Schlitten, welcher den Bearbeitungskopf der Verzahnungsschleifmaschine trägt, angeordnet ist.

12. Verzahnungsschleifmaschine nach Anspruch 10 oder 11, wobei der Bearbeitungskopf mit der Werkzeugaufnahme über eine erste lineare Bewegungsachse (V1) relativ zum Schlitten bewegbar ist, so dass zum Abrichten mittels der Schwenkachse (A1) und der ersten linearen Bewegungsachse (V1) Relativbewegungen mit zwei unterschiedlichen Freiheitsgraden zwischen der Werkzeugaufnahme und der Abrichtwerkzeugaufnahme erzeugbar sind.

13. Verzahnungsschleifmaschine nach einem der vorangegangenen Ansprüche, wobei der Schlitten an einem Maschinenständer angeordnet ist, welcher über eine dritte lineare Bewegungsachse (X) senkrecht zur Drehachse (C) der Werkstückaufnahme verfahrbar ist.

14. Verzahnungsschleifmaschine nach einem der vorangegangenen Ansprüche, wobei eine zweite Abrichteinheit vorgesehen ist, welche über eine vierte lineare Bewegungsachse (Z3) auf die erste Abrichteinheit zu und von dieser weg bewegt werden kann, um den Abstand zwischen den in den Abrichtwerkzeugaufnahen der ersten und zweiten Abrichteinheiten aufnehmbaren Abrichtwerkzeuge zu verändern, insbesondere zum zweiseitigen Abrichten eines Werkzeugs.

15. Verzahnungsschleifmaschine nach einem der vorangegangenen Ansprüche, wobei es sich um eine Verzahnungsschleifmaschine zur Herstellung einer Innenverzahnung handelt, wobei vorteilhafterweise der Bearbeitungskopf einen Arm aufweist, an welchem die Werkzeugaufnahme angeordnet ist, wobei vorteilhafterweise der Arm radial zur Schwenkachse (A1) verläuft und so einen Abstand zwischen der Schwenkachse (A1) und der Werkzeugaufnahme herstellt.

16. Verzahnungsschleifmaschine insbesondere nach einem der vorangegangenen Ansprüche, mit einer Werkstückaufnahme und zwei Werkzeugaufnahmen zur Aufnahme von separaten Werkzeugen, wobei die Werkzeugaufnahmen jeweils um eine Drehachse in Rotation versetzbar sind und an einem gemeinsamen Bearbeitungskopf angeordnet sind, welcher über eine Schwenkachse (A1) schwenkbar ist, wobei ein in der Werkstückaufnahme eingespanntes Werkstück durch in den Werkzeugaufnahmen eingespannte Werkzeuge bearbeitbar ist,
**dadurch gekennzeichnet,**
**dass** die beiden Werkzeugaufnahmen auf von der Schwenkachse (A1) abgewandten, insbesondere gegenüberliegenden Seiten des Bearbeitungskopfes angeordnet sind, wobei die Werkzeugaufnahmen vorteilhafterweise auf einer gemeinsamen Drehachse (B1) oder parallelen Drehachsen angeordnet und/oder über einen gemeinsamen Antrieb angetrieben sind, wobei weiterhin vorteilhafterweise die in den zwei Werkzeugaufnahmen aufgenommenen Werkzeuge über mindestens eine gemeinsame Abrichteinheit abrichtbar sind, wobei vorteilhafterweise nach dem Abrichten des ersten Werkzeugs das zweite Werkzeug durch ein Schwenken des Bearbeitungskopfes um die Schwenkachse (A1) zur Abrichteinheit bewegbar ist.
